(19) Europäisches Patentamt
European Patent Office
Office européen des brevets

(11) **EP 4 070 443 B1**

(12) **EUROPÄISCHE PATENTSCHRIFT**

(45) Veröffentlichungstag und Bekanntmachung des Hinweises auf die Patenterteilung:
**23.04.2025 Patentblatt 2025/17**

(21) Anmeldenummer: **20704418.1**

(22) Anmeldetag: **28.01.2020**

(51) Internationale Patentklassifikation (IPC):
*H02M 1/32* (2007.01)    *H02M 7/12* (2006.01)
*H02M 7/23* (2006.01)    *H02M 7/483* (2007.01)
*H02M 7/497* (2007.01)    *H02M 7/537* (2006.01)
*H02H 3/08* (2006.01)    *H02H 3/087* (2006.01)
*H02H 7/12* (2006.01)    *H02H 7/122* (2006.01)
*H02H 7/125* (2006.01)

(52) Gemeinsame Patentklassifikation (CPC):
**H02M 1/325; H02M 7/12; H02M 7/4835;**
H02H 7/122; Y02E 60/60

(86) Internationale Anmeldenummer:
**PCT/EP2020/052027**

(87) Internationale Veröffentlichungsnummer:
**WO 2021/151469 (05.08.2021 Gazette 2021/31)**

(54) **VERFAHREN ZUM BETREIBEN EINES MODULAREN MULTILEVEL-UMRICHTERS UND MODULARER MULTILEVEL-UMRICHTER**

METHOD FOR OPERATING A MODULAR MULTILEVEL CONVERTER, AND MODULAR MULTILEVEL CONVERTER

PROCÉDÉ DE FONCTIONNEMENT D'UN CONVERTISSEUR MODULAIRE À NIVEAUX MULTIPLES ET CONVERTISSEUR MODULAIRE À NIVEAUX MULTIPLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**12.10.2022 Patentblatt 2022/41**

(73) Patentinhaber: **Siemens Energy Global GmbH & Co. KG**
**81739 München (DE)**

(72) Erfinder:
• **ERGIN, Dominik**
**91083 Baiersdorf (DE)**
• **KAMMERER, Felix**
**91058 Erlangen (DE)**

(56) Entgegenhaltungen:
**WO-A1-2017/125134    WO-A1-2017/125134**
**WO-A1-2018/179145    CN-A- 110 635 675**
**CN-A- 110 635 675    CN-A- 110 677 029**
**CN-A- 110 677 029    CN-B- 107 728 508**
**CN-B- 107 728 508**

**Beschreibung**

Die Erfindung betrifft ein Verfahren zum Betreiben eines modularen Multilevel-Umrichters und einen modularen Multilevel-Umrichter.

Umrichter sind leistungselektronische Schaltungen zum Umwandeln von elektrischer Energie. Mit Umrichtern kann Wechselstrom in Gleichstrom, Gleichstrom in Wechselstrom, Wechselstrom in Wechselstrom anderer Frequenz und/oder Amplitude oder Gleichstrom in Gleichstrom anderer Spannung umgewandelt werden. Umrichter können eine Vielzahl von gleichartigen Submodulen aufweisen, welche elektrisch in Reihe geschaltet sein können. Diese Submodule weisen jeweils mindestens zwei elektronische Schaltelemente und einen elektrischen Energiespeicher auf. Solche Umrichter werden als modulare Multilevel-Umrichter (kurz: MMC oder M2C) bezeichnet.

Durch die elektrische Reihenschaltung der Submodule lassen sich hohe Ausgangsspannungen erreichen. Die modularen Multilevel-Umrichter sind einfach an unterschiedliche Spannungen anpassbar (skalierbar) und eine gewünschte Ausgangsspannung kann relativ genau erzeugt werden. Modulare Multilevel-Umrichter werden oftmals im Hochspannungsbereich eingesetzt, beispielsweise als Umrichter bei Hochspannungs-Gleichstrom-Übertragungsanlagen (kurz: HGÜ oder HVDC) oder als Blindleistungskompensatoren bei flexiblen Drehstromübertragungssystemen (FACTS).

Aus der internationalen Patentanmeldung WO 2017/125134 A1 ist ein modularer Multilevel-Umrichter bekannt, bei dem die Submodule jeweils eine optische Überbrückungseinrichtung aufweisen, welche das jeweilige Submodul bei einem Defekt des Submoduls optisch überbrückt.

Aus der Patentanmeldung CN 110 635 675 A ist ein Verfahren zum Erkennen von Submodulen bekannt, die nicht mehr von einem Steuerungssystem überwacht werden können. Diese Submodule werden als schwarze Submodule bezeichnet.

Die Patentanmeldung CN 110 677 029 A offenbart ein Submodul eines modularer Multilevel-Umrichters, das einen passiven Überspannungsschutz aufweist. Dabei sind die Submodulanschlüsse mit einer Parallelschaltung aus einem elektronischen Schalter und einem Bypass-Schalter versehen.

Aus der Patentanmeldung CN 107 728 508 B ist es bekannt, Submodule eines modularer Multilevel-Umrichters zu erkennen, die nicht in der Lage sind, Statusinformationen zu einer Überwachungseinrichtung zu senden.

In modularen Multilevel-Umrichtern besteht eine Herausforderung unter anderem darin, wie mit defekten Submodulen umgegangen wird.

In der Regel kann im Fall eines Ausfalls eines einzelnen Submoduls des modularen Multilevel-Umrichters eine Abschaltung der gesamten mit Strom versorgten Anlage nicht akzeptiert werden. Deshalb muss das fehlerhafte Submodul während des Normalbetriebs in einen sicheren Zustand überführt werden und wird erst beim nächsten regulären Herunterfahren der Anlage ausgetauscht.

Um den Weiterbetrieb auch mit defekten Submodulen zu ermöglichen, können alle Submodule mit einem Bypass-Schalter ausgestattet sein, der das jeweilige Submodul überbrücken kann. Dieser Bypass-Schalter kann zwischen den Submodulanschlüssen (oder auch Anschlussklemmen) des Submoduls installiert sein. So kann der Anlagenstrom über das fehlerhafte Submodul fließen ohne eine Beschädigung des modularen Multilevel-Umrichters, insbesondere durch entstehende Lichtbögen, zu bewirken.

Ein Kriterium zum Schließen des Bypass-Schalters kann sein, dass das Submodul beim Überschreiten eines Schwellenwertes der Kondensatorspannung eines Kondensators in dem Submodul selbstständig die Schließung des Bypass-Schalters vornimmt (dies kann auch als Bypass-Schalter-Schwelle bezeichnet werden). Dadurch wird das Submodul überbrückt und vor einer weiteren Aufladung geschützt. Die dafür notwendige Logik kann auf dem Submodul installiert sein und autark von der restlichen Ansteuerung des Submoduls arbeiten.

Durch dieses Auslösekriterium lässt sich ein Großteil der Fehlerfälle beherrschen, da viele Fehlerszenarien direkt, das heißt durch den Fehlereintritt selbst, oder indirekt, das heißt durch eine Reaktion der Umrichter-Steuerung, zum Blockieren des fehlerhaften Submoduls führen können. Wenn das Submodul blockiert ist, werden keine Ansteuersignale mehr an die Schaltelemente des Submoduls gesendet bzw. wird die Leistungselektronik des Submoduls abgeschaltet.

Ist ein Submodul blockiert, so kann es über Freilaufdioden der elektronischen Schaltelemente des Submoduls nur noch aufgeladen werden. Eine Entladung ist nicht mehr möglich. Wird die Anlage weiterbetrieben, wird das Submodul folglich unweigerlich durch den fließenden Zweigstrom aufgeladen. Das Blockieren eines Submoduls während des Betriebs führt somit zum Schließen des Bypass-Schalters.

Dieser Selbstschutz der Submodule funktioniert auch bei Ausfall einer Kommunikation zwischen den Submodulen und einer Kommunikationsvorrichtung bzw. Steuervorrichtung des modularen Multilevel-Umrichters. Empfängt das betroffene Submodul nämlich keine Kommunikationstelegramme mehr von der Kommunikationsvorrichtung, so blockiert es sich selbst. Werden in der Umrichter-Steuerung keine Kommunikationstelegramme mehr vom betreffenden Submodul empfangen, so wird ein Befehl zum Blockieren des Submoduls ausgesendet.

Da der Bypass-Schalter während des Betriebs nicht zu 100 % auf Funktion getestet werden kann, offenbart sich erst im Falle eines Fehlers des Submoduls, ob dieser funktioniert. Das Szenario eines Versagens eines Bypass-Schalters muss folglich berücksichtigt werden. In diesem Fall ist mit einem undefinierten Stromfluss durch das Submodul, also einem Lichtbogen, zu rechnen, welcher die Anlage beschädigen kann. Im Falle eines Versagens des Bypass-Schalters muss folglich die Anlage abgeschaltet werden.

Zur Sicherstellung, dass der Bypass-Schalter geschlossen ist, kann jedes Submodul eine Überwachung des Bypass-Schalters aufweisen. Für einen Großteil der Fehler von Submodulen erhält die Kommunikationsvorrichtung bzw. Steuervorrichtung somit vom Submodul die Rückmeldung, ob der Bypass-Schalter geschlossen oder offen ist. Im Falle eines Ausfalls der Kommunikation ist dies allerdings nicht mehr möglich. Kommt es folglich zu einem Ausfall der Kommunikation mit einem Submodul und gleichzeitig zum Versagen des Bypass-Schalters kann dies von der Kommunikationsvorrichtung bzw. Steuervorrichtung nicht erkannt werden.

Wird die Anlage in diesem Fall nicht abgeschaltet, so würde der Anlagenstrom das betreffende Submodul immer weiter laden, bis es an einer Stelle zum Versagen einer Isolation kommen würde. Anschließend würde sich ein Lichtbogen ausbilden und der Anlagenstrom würde undefiniert über diese Fehlerstelle fließen. Selbst wenn ein solcher Lichtbogen von einer optischen Überwachung in einer Umrichterhalle detektiert wird, ist die Folge unweigerlich eine große Beschädigung der Anlage.

Auch bei geringerem Strom ist damit zu rechnen, dass ein Lichtbogen nach wenigen Sekunden aus dem Submodul austritt und so zu Beschädigungen in der Anlage führt.

Zur sicheren Handhabung des vorstehend beschriebenen Fehlerszenarios kann die Schließung des Bypass-Schalters nicht nur vom betreffenden Submodul selbst, sondern auch von einem anderen Submodul, etwa einem benachbarten Submodul überwacht werden. Jeweils zwei benachbarte Submodule können so ein Paar bilden, dass sich gegenseitig überwacht. Fällt ein Submodul mit einem Kommunikationsfehler aus, so wird die Schließung des betreffenden Bypass-Schalters von dessen benachbartem Submodul detektiert und an die Kommunikationsvorrichtung bzw. Steuervorrichtung kommuniziert.

Damit durch eine solche Bypass-Schalter-Schließüberwachung ein Versagen eines Bypass-Schalters sicher detektiert werden kann, muss eine zeitliche Aufladung des fehlerbehafteten, blockierten Submoduls beachtet werden. Erst wenn die Bypass-Schalter-Schwelle überschritten wurde, offenbart sich, ob der Bypass-Schalter im fehlerhaften Submodul funktioniert.

Ist ein Submodul blockiert und wird vom fließenden Anlagenstrom aufgeladen, so kann es abhängig vom Arbeitspunkt der Anlage gegebenenfalls sehr lange dauern, bis die Kondensatorspannung den Schwellenwert für das Schließen des Bypass-Schalters überschreitet. Befindet sich die Anlage bspw. gerade im Leerlauf oder bei geringer Leistung, kann die Aufladung gegebenenfalls mehrere zehn Sekunden dauern. Ein zu langes Warten für die Aufladung und das damit verbundene Schließen des Bypass-Schalters kann aber nicht in Kauf genommen werden, da nach einer Zeitdauer von wenigen Sekunden mit dem Austreten des Lichtbogens aus dem Submodul gerechnet werden muss. In dieser Zeit muss folglich die Detektion des Versagens eines Bypass-Schalters stattfinden.

Damit eine Detektion eines Versagens eines Bypass-Schalters auch bei geringer Leistung bzw. im Leerlauf der Anlage im Stand der Technik möglich ist, muss im Betrieb ein minimaler Anlagenstrom sichergestellt werden. Somit ist ein minimal vorhandener Stromfluss über die Submodule vorhanden, wodurch das Erreichen der Bypass-Schalter-Schwelle nach einer gewissen Zeit sichergestellt ist.

Die vorstehend beschriebene Lösung zur Detektion eines Versagens des Bypass-Schalters benötigt einen minimalen Stromfluss über die Submodule. Dieser Stromfluss verursacht bei geringer Leistung bzw. im Leerlauf signifikante Zusatzverluste, was zur Erhöhung der Betriebskosten der Anlage führt.

Aufgabe der Erfindung ist es daher, zumindest teilweise die Nachteile aus dem Stand der Technik bekannter Verfahren zum Betreiben von modularen Multilevel-Umrichtern zu vermindern, insbesondere ein Betriebsverfahren bereitzustellen, dass besonders kostengünstig ist und besonders zuverlässig die Detektion eines Versagens eines Bypass-Schalters ermöglicht.

Die voranstehende Aufgabe wird durch die Gegenstände der Patentansprüche, insbesondere durch ein Verfahren zum Betreiben eines modularen Multilevel-Umrichters nach Anspruch 1 und durch einen modularen Multilevel-Umrichter nach Anspruch 8 gelöst. Weitere Vorteile und Details der Erfindung ergeben sich aus den Unteransprüchen, der Beschreibung und den Zeichnungen. Dabei gelten Merkmale und Details, die im Zusammenhang mit dem erfindungsgemäßen Verfahren offenbart sind, selbstverständlich auch im Zusammenhang mit dem erfindungsgemäßen modularen Multilevel-Umrichter, sodass bezüglich der Offenbarung zu den einzelnen Erfindungsaspekten stets wechselseitig Bezug genommen wird beziehungsweise werden kann. Die gestellte Aufgabe wird gemäß einem ersten Aspekt gelöst durch ein Verfahren zum Betreiben eines modularen Multilevel-Umrichters mit einer Vielzahl von Submodulen, welche jeweils zumindest zwei elektronische Schaltelemente, einen elektrischen Energiespeicher, zwei Submodulanschlüsse, einen Bypass-Schalter zur Überbrückung seines Submoduls (1, 2, 3, 4, 5, 6) in dem modularen Multilevel-Umrichter und ein Kommunikationselement zur Kommunikation mit einer Kommunikationsvorrichtung des modularen Multilevel-Umrichters aufweisen, wobei das Verfahren die Schritte aufweist:

(a) Ermitteln, dass die Vielzahl von Submodulen ein derart defektes Submodul aufweist, dass das Kommunikationselement in dem defekten Submodul nicht mit der Kommunikationsvorrichtung kommuniziert,

(b) Bestimmen, ob ein aktueller aus einem Arbeitspunkt des modularen Multilevel-Umrichters resultierender Armstrom unterhalb eines vorbestimmten Schwellenwertes liegt, und

(c) Erzeugen oder Verstärken eines internen Kreisstromes in dem modularen Multilevel-Umrichter mit dem defekten Submodul, falls der aus dem Arbeitspunkt des modularen Multilevel-Umrichters resultierende Armstrom unterhalb des vorbestimmten Schwellenwertes des Arbeitspunktes liegt.

Folglich sieht die bereitgestellte Lösung vor, dass im Bedarfsfall ein Umrichter-interner Kreisstrom erzeugt wird. Hierdurch können die Verluste im Leerlauf deutlich reduziert werden. Ferner können im Bedarfsfall Kreisströme erzeugt werden, die wesentlich größer sind als die bisherigen minimalen Anlagenströme bzw. Umrichterströme oder Ströme im modularen Multilevel-Umrichter. Ein defektes Submodul kann somit mittels des bereitgestellten Verfahrens wesentlich schneller geladen werden, wodurch das Versagen eines Bypass-Schalters schneller detektierbar wird und die Wahrscheinlichkeit einer Fehlerausprägung mit Lichtbogen wesentlich reduziert wird.

Der Arbeitspunkt und der daraus resultierende Armstrom können mittels der Wirkleistung und Blindleistung gegenüber einer Gleichspannungsseite bzw. einem Wechselspannungsnetz des modularen Multilevel-Umrichters bestimmt werden. Der Armstrom ist der Strom, der durch einen Phasenmodulzweig eines Phasenmoduls des modularen Multilevel-Umrichters fließt. Dieser Armstrom setzt sich aus einer Gleichstromkomponente und einer Wechselstromkomponente zusammen. Die Gleichstromkomponente des Armstromes hängt vom Wirkleistungsaustausch mit der Gleichspannungsseite ab. Die Wechselstromkomponente hängt vom Leistungsaustausch (Wirk- und Blindleistung) mit der Wechselspannungsseite ab. In dem Phasenmodulzweig sind mehrere Submodule in Reihe zueinander geschaltet. Die Phasenmodulzweige sind jeweils an einer Wechselspannungsseite und einer Gleichspannungsseite angeschlossen. Je zwei Phasenmodulzweige bilden dabei ein Phasenmodul. Entsprechend wird der Schwellenwert durch eine Höhe oder Amplitude einer minimalen Stromstärke des durch den modularen Multilevel-Umrichter fließenden Armstromes bestimmt. Der Schwellenwert kann derart gewählt werden, dass der Armstrom ausreicht, um den elektrischen Energiespeicher in einem blockierten Submodul in einer kurzen Zeitspanne zu laden, sodass der Bypass-Schalter dieses Submoduls in der kurzen Zeitspanne geschlossen wird.

Die elektronischen Schaltelemente der Submodule können als abschaltbare Halbleiterventile, insbesondere als Transistoren, ganz besonders als Bipolartransistoren mit isolierter Gate-Elektrode, ausgebildet sein. Antiparallel zu jedem der elektronischen Schaltelemente kann jeweils eine Halbleiterdiode, insbesondere eine Freilaufdiode, geschaltet sein.

Die elektrischen Energiespeicher der Submodule können als Kondensatoren ausgebildet sein.

Die Bypass-Schalter der Submodule können insbesondere zwischen den zwei Submodulanschlüssen des jeweiligen Submodules angeordnet sein. Die Submodulanschlüsse können als Klemmanschlüsse ausgebildet sein.

Submodule der Vielzahl von Submodulen können mittels der Submodulanschlüsse in Reihe miteinander geschaltet sein. Mehrere in Reihe miteinander geschaltete Submodule können zu einem Phasenmodulzweig zusammengefasst sein. Je zwei miteinander verschaltete Phasenmodulzweige können zu einem Phasenmodul zusammengefasst sein.

Der interne Kreisstrom fließt in dem defekten Submodul. Der interne Kreisstrom kann insbesondere zusätzlich zu einem bei einem Arbeitspunkt des modularen Multilevel-Umrichters fließenden Stromes, insbesondere Drehstromes, injiziert bzw. erzeugt oder verstärkt werden. Ferner kann der Umrichter-interne Kreisstrom erzeugt oder verstärkt werden, wenn sich der modulare Multilevel-Umrichter in einem Leerlaufbetrieb befindet. Bei internen bzw. Umrichter-internen Kreisströmen handelt es sich um einen Stromfluss zwischen Phasenmodulen, insbesondere den drei Phasenmodulen, des modularen Multilevel-Umrichters, der zu keinem Leistungsaustausch mit einer Wechselspannungs- oder einer Gleichspannungsseite des modularen Multilevel-Umrichters führt.

Es ist vorgesehen, dass das defekte Submodul vor dem Erzeugen oder Verstärken des internen Kreisstromes in dem modularen Multilevel-Umrichter mit dem defekten Submodul blockiert wird, wodurch der elektrische Energiespeicher des defekten Submoduls mittels des internen Kreisstromes aufgeladen wird. Beim Blockieren des defekten Submoduls werden die elektronischen Schaltelemente nicht mehr angesteuert bzw. wird eine Leistungselektronik des Submoduls ausgeschaltet. Folglich fließen der Strom des modularen Multilevel-Umrichters gemäß seinem Arbeitspunkt und/oder der Umrichter-interne Kreisstrom durch das defekte Submodul, insbesondere über die Freilaufdioden, zu dem elektrischen Energiespeicher und laden diesen auf. Das Blockieren kann dabei direkt über den Eintritt des Defektes des Submoduls selbst oder indirekt durch eine Reaktion einer Steuerungsvorrichtung des modularen Multilevel-Umrichters ausgelöst werden.

Dabei ist zudem vorgesehen, dass der Bypass-Schalter des blockierten defekten Submoduls geschlossen wird, um das blockierte defekte Submodul in dem modularen Multilevel-Umrichter zu überbrücken, wenn der elektrische Energiespeicher des blockierten defekten Submoduls mittels des internen Kreisstromes eine vorbestimmte Aufladung erreicht hat. Die vorbestimmte Aufladung des elektrischen Energiespeichers kann eine maximale Aufladung des elektrischen Energiespeichers sein bzw. der maximalen Spannung des elektrischen Energiespeichers entsprechen. Folglich gilt dies als einfaches Auslösekriterium, um den Bypass-Schalter zu schließen, wenn ein defektes Submodul blockiert ist.

Es kann vorgesehen sein, dass bei der Bestimmung, ob der aus dem Arbeitspunkt resultierende Armstrom des modularen Multilevel-Umrichters unterhalb des vorbestimmten Schwellenwertes des Arbeitspunktes liegt, beispielsweise ein äquivalenter Ladestrom des elektrischen Energiespeichers in dem defekten Submodul herangezogen wird. Mittels des äquivalenten Ladestromes lässt sich eine Aussage darüber treffen, wie viel von dem beim Arbeitspunkt fließenden Armstrom bei dem elektrischen Energiespeicher als äquivalenter Ladestrom ankommt, wenn das Submodul blockiert ist. Der äquivalente Ladestrom kann näherungsweise bestimmt werden.

Beim einem modularen Multilevel-Umrichtern mit Halbbrückenmodulen als Submodulen kann der äquivalente DC-Ladestrom $i_{DC\_BPS}$ durch folgende Formel näherungsweise bestimmt werden:

$$i_{DC\_BPS} = \frac{i_{\sec\_eff}}{\pi \cdot \sqrt{2}} + \frac{i_d}{6}$$

wobei $i_{sec\_eff}$ der Effektivwert eines sekundärseitigen AC-Stromes des modularen Multilevel-Umrichters und $i_d$ ein aktueller DC-Strom (mit Vorzeichen) ist.

Beim einem modularen Multilevel-Umrichter mit Vollbrückenmodulen als Submodulen kann der äquivalente DC-Ladestrom $i_{DC\_BPS}$ durch folgende Formel näherungsweise bestimmt werden:

$$i_{DC\_BPS} = \frac{i_{\sec\_eff} \cdot \sqrt{2}}{\pi}$$

wobei $i_{sec\_eff}$ der Effektivwert eines sekundärseitigen AC-Stromes des modularen Multilevel-Umrichters ist.

Alternativ oder zusätzlich kann der aus dem Arbeitspunkt des modularen Multilevel-Umrichters resultierende Armstrom in einer Lookup-Tabelle nachgeschlagen werden, um zu bestimmen, ob der aus dem Arbeitspunkt resultierende Armstrom des modularen Multilevel-Umrichters unterhalb des vorbestimmten Schwellenwertes des Armstromes liegt und insbesondere um die Höhe, Frequenz und/oder Phasenlage des internen Kreisstromes zu bestimmen. In der Lookup-Tabelle kann hierzu für jeden aus dem Arbeitspunkt des modularen Multilevel-Umrichters resultierender Armstrom (insbesondere anhand des P-Q-Diagramms) eine Höhe, Frequenz und/oder Phasenlage des internen Kreisstromes hinterlegt sein.

Es ist vorgesehen, dass jedes Submodul der Vielzahl von Submodulen mittels je eines Kommunikationselements mit einem Bypass-Schalter eines anderen Submoduls der Vielzahl von Submodulen kommunikationstechnisch verbunden ist, um jeweils den Zustand eines Bypass-Schalters jedes Submoduls der Vielzahl von Submodulen mittels jeweils eines anderen Submoduls zu überwachen, wobei das Erzeugen oder Verstärken des Kreisstromes in dem modularen Multilevel-Umrichter mit dem defekten Submodul erfolgt, falls ferner das Kommunikationselement eines das defekte Submodul überwachenden Submoduls, das mit dem Bypass-Schalter des defekten Submoduls kommunikationstechnisch verbunden ist, mit der Kommunikationsvorrichtung kommuniziert. Der Zustand des Bypass-Schalters kann entsprechend offen oder geschlossen sein. Im offenen Zustand des Bypass-Schalters wird das defekte Submodul mit Strom durchflossen. Im geschlossenen Zustand des Bypass-Schalters ist das defekte Submodul überbrückt. Die kommunikationstechnischen Verbindungen können beispielsweise mittels Lichtwellenleitern ausgebildet sein. Insbesondere können Submodule in einem Paar von Submodulen sich gegenseitig überwachen. Folglich kann ein Submodul des Paars mittels eines Kommunikationselementes mit dem Bypass-Schalter des anderen Submoduls des Paars und umgekehrt verschaltet sein. Die Submodule des Paars von Submodulen können benachbarte Submodule sein, um die Kommunikationswege zu verkürzen.

Es ist ferner vorgesehen, dass das Erzeugen oder Verstärken des internen Kreisstromes in dem modularen Multilevel-Umrichter mit dem defekten Submodul erfolgt, falls ferner das Kommunikationselement des das defekte Submodul überwachenden Submoduls an die Kommunikationsvorrichtung kommuniziert, dass der Bypass-Schalter des defekten Submoduls offen ist. Dann steht noch nicht fest, ob der Bypass-Schalter funktionsfähig ist oder nicht, da der elektrische Energiespeicher womöglich noch nicht hinreichend geladen ist, um den Bypass-Schalter zu schließen. Um nun schnellstmöglich den Bypass-Schalter zu schließen und Sicherheit darüber zu schaffen, ob der Bypass-Schalter funktionsfähig ist, muss der Umrichter-interne Kreisstrom erzeugt oder verstärkt werden, falls der aus dem Arbeitspunkt des modularen Multilevel-Umrichters resultierende Armstrom unterhalb des vorgegebenen Schwellenwertes liegt.

Ferner ist dabei auch bevorzugt, dass nach einer vorgegebenen Zeitdauer des Fließens des erzeugten oder verstärkten internen Kreisstromes in dem modularen Multilevel-Umrichter mit dem defekten Submodul mittels des das defekte Submodul überwachenden Submoduls geprüft wird, ob der Bypass-Schalter in dem defekten Submodul geschlossen ist. Nach der vorgegebenen Zeitdauer des Fließens des internen Kreisstromes müsste der Bypass-Schalter nämlich geschlossen sein. Ist dies der Fall, hat der Bypass-Schalter funktioniert, sodass das defekte Submodul überbrückt wurde und bei dem nächsten Stillstand oder der nächsten Wartung ausgetauscht werden kann.

Dabei ist wiederum bevorzugt, dass die vorgegebene Zeitdauer in Abhängigkeit von der Stromstärke und/oder der Spannung des erzeugten oder verstärkten internen Kreisstromes eingestellt wird. Die Zeitdauer kann insoweit abhängig von der Stromstärke und/oder der Spannung zur Optimierung von Stromverbrauch, Sicherheit und Zuverlässigkeit gewählt werden.

Auch ist dabei bevorzugt, dass der modulare Multilevel-Umrichter mit dem defekten Submodul ausgeschaltet wird, falls das das defekte Submodul überwachende Submodul nach Ablauf der vorgegebenen Zeitdauer mittels seines Kommunikationselementes an die Kommunikationsvorrichtung kommuniziert, dass der Bypass-Schalter des defekten Submoduls offen ist. Ist der Bypass-Schalter nämlich weiterhin offen, lässt dies darauf schließen, dass der Bypass-Schalter defekt ist, sodass nun das Herunterfahren des modularen Multilevel-Umrichters eingeleitet werden muss, um eine ansonsten mögliche Beschädigung zu vermeiden.

Im Übrigen ist bevorzugt, dass eine Höhe, Frequenz und/oder Phasenlage des internen Kreisstromes in dem modularen Multilevel-Umrichter mit dem defekten Submodul in Abhängigkeit von dem aus dem Arbeitspunkt des modularen Multilevel-Umrichters resultierenden Armstroms eingestellt wird. Hierzu kann die zuvor erwähnte Lookup-Tabelle genutzt werden. Folglich kann der Energieverbrauch des modularen Multilevel-Umrichters durch Einstellen der Freiheitsgrade Höhe, Frequenz und/oder Phasenlage des internen Kreisstromes optimiert werden. Läuft der modulare Multilevel-Umrichter beispielsweise in einem Leerlaufbetrieb, wird ein hoher interner Kreisstrom erzeugt. Läuft der modulare Multilevel-Umrichter hingegen beispielsweise mit einer Teillast unterhalb des vorbestimmten Schwellenwertes für den Armstrom, wird ein demgegenüber geringerer interner Kreisstrom erzeugt, da der insgesamt fließende Strom dann dennoch so hinreichend hoch ist, dass mit ähnlicher oder gleicher Sicherheit eine Beschädigung des modularen Multilevel-Umrichters verhindert werden kann.

Dabei ist bevorzugt, dass der Schwellenwert (des Armstroms) derart vorbestimmt ist oder wird, dass ein Schließen des Bypass-Schalters in dem blockierten defekten Submodul bei Betreiben des modularen Multilevel-Umrichters bei dem Schwellenwert höchstens 10 Sekunden, insbesondere höchstens 7 Sekunden, dauert. Dadurch wird ermöglicht, dass die Feststellung eines Defektes des Bypass-Schalters erfolgt, noch bevor es üblicherweise zu einer Bildung eines Lichtbogens in dem defekten Submodul kommt, die zu einer Beschädigung des modularen Multilevel-Umrichters führen würde.

Auch ist bevorzugt, dass die Submodule als Halbbrückenmodule und/oder als Vollbrückenmodule ausgebildet sind. Dabei ist es möglich, dass der modulare Multilevel-Umrichter nur Halbbrückenmodule, nur Vollbrückenmodule oder sowohl Halbbrückenmodule als auch Vollbrückenmodule aufweist.

Die eingangs gestellte Aufgabe wird gemäß einem zweiten Aspekt gelöst durch einen modularen Multilevel-Umrichter gemäß den Merkmalen des ersten Aspektes der Erfindung, wobei der modulare Multilevel-Umrichter zum Ausführen des Verfahrens gemäß dem ersten Aspekt der Erfindung eingerichtet ist.

Entsprechend weist der modularen Multilevel-Umrichter eine Vielzahl von Submodulen, welche jeweils zumindest zwei elektronische Schaltelemente, einen elektrischen Energiespeicher, zwei Submodulanschlüsse, einen Bypass-Schalter zu seiner Überbrückung in dem modularen Multilevel-Umrichter und ein Kommunikationselement zur Kommunikation mit einer Kommunikationsvorrichtung des modularen Multilevel-Umrichters aufweisen, auf.

Insbesondere kann der modulare Multilevel-Umrichter ferner eine Steuervorrichtung aufweisen. Die Steuervorrichtung kann die Kommunikationsvorrichtung aufweisen oder kommunikationstechnisch mit dieser verbunden sein. Die Steuervorrichtung kann zur Ausführung der Operationen des modularen Multilevel-Umrichters eingerichtet sein, also beispielsweise des Einstellens des Arbeitspunktes des modularen Multilevel-Umrichters, eines Abschaltens des modularen Multilevel-Umrichters, aber auch eines Blockierens eines defekten Submodules und eines Erzeugens oder Verstärkens des internen Kreisstromes in dem modularen Multilevel-Umrichter. Folglich kann insbesondere die Steuervorrichtung zum Ausführen des Verfahrens gemäß dem ersten Aspekt der Erfindung eingerichtet sein.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Sämtliche aus den Ansprüchen, der Beschreibung oder den Figuren hervorgehende Merkmale und/oder Vorteile, einschließlich konstruktiver Einzelheiten und räumlicher Anordnungen können sowohl für sich als auch in den verschiedenen Kombinationen erfindungswesentlich sein.

Anhand der beigefügten Zeichnungen wird die Erfindung nachfolgend näher erläutert. Dabei zeigt:

Figur 1 eine schematische Ansicht eines Schaltbildes eines modularen Multilevel-Umrichters gemäß einem Ausführungsbeispiel der Erfindung,

Figur 2 eine schematische Ansicht eines Halbbrückenmoduls in dem modularen Multilevel-Umrichter aus Figur 1, und

Figur 3 eine schematische Ansicht eines Vollbrückenmoduls in dem modularen Multilevel-Umrichter aus Figur 1.

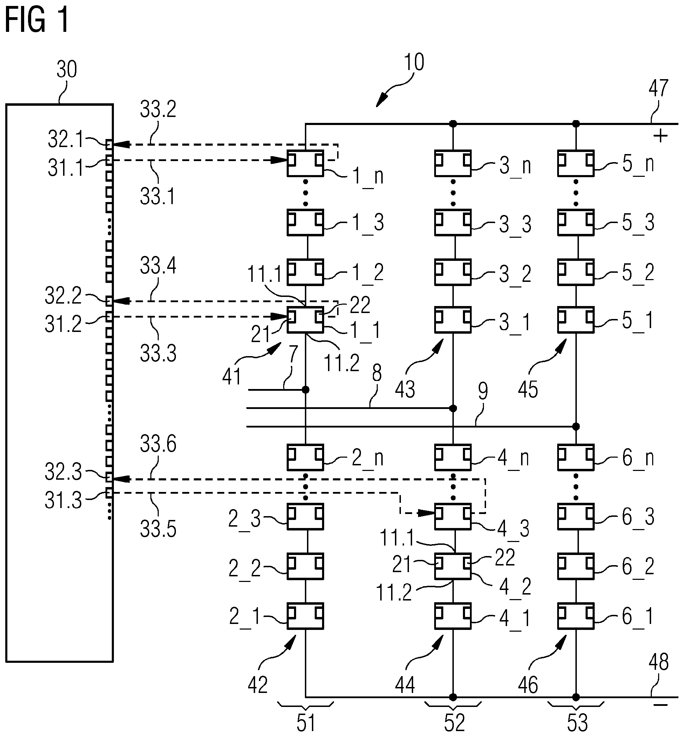

Elemente mit gleicher Funktion und Wirkungsweise sind in den Figuren 1 bis 3 jeweils mit denselben Bezugszeichen versehen. Mehrere gleiche Elemente in einer Figur sind mit einer fortlaufenden Nummerierung versehen, wobei die fortlaufende Nummerierung durch einen Punkt oder Unterstrich von ihrem Bezugzeichen getrennt ist.

Figur 1 zeigt eine schematische Ansicht eines Schaltbildes eines modularen Multilevel-Umrichters 10 gemäß einem Ausführungsbeispiel der Erfindung.

Der modulare Multilevel-Umrichter 1 weist einen ersten Wechselspannungsanschluss 7, einen zweiten Wechselspannungsanschluss 8 und einen dritten Wechselspannungsanschluss 9 auf. Der erste Wechselspannungsanschluss 7 ist elektrisch mit einem ersten Phasenmodulzweig 41 und einem zweiten Phasenmodulzweig 42 verbunden. Der erste Phasenmodulzweig 41 und der zweite Phasenmodulzweig 42 bilden ein erstes Phasenmodul 51 des modularen Multilevel-Umrichters 10.

Das dem ersten Wechselspannungsanschluss 7 abgewandte Ende des ersten Phasenmodulzweigs 41 ist mit einem ersten Gleichspannungsanschluss 47 elektrisch verbunden. Das dem ersten Wechselspannungsanschluss 7 abgewandte Ende des zweiten Phasenmodulzweigs 42 ist mit einem zweiten Gleichspannungsanschluss 48 elektrisch verbunden. Der erste Gleichspannungsanschluss 47 ist ein positiver Gleichspannungsanschluss und der zweite Gleichspannungsanschluss 48 ist ein negativer Gleichspannungsanschluss.

Der zweite Wechselspannungsanschluss 8 ist mit einem Ende eines dritten Phasenmodulzweigs 43 und mit einem Ende eines vierten Phasenmodulzweigs 44 elektrisch verbunden. Der dritte Phasenmodulzweig 43 und der vierte Phasenmodulzweig 44 bilden ein zweites Phasenmodul 52.

Der dritte Wechselspannungsanschluss 9 ist mit einem Ende eines fünften Phasenmodulzweigs 45 und mit einem Ende eines sechsten Phasenmodulzweigs 46 elektrisch verbunden. Der fünfte Phasenmodulzweig 45 und der sechste Phasenmodulzweig 46 bilden ein drittes Phasenmodul 53.

Das dem zweiten Wechselspannungsanschluss 8 abgewandte Ende des dritten Phasenmodulzweigs 43 und das dem dritten Wechselspannungsanschluss 9 abgewandte Ende des fünften Phasenmodulzweigs 45 sind mit dem ersten Gleichspannungsanschluss 47 elektrisch verbunden. Das dem zweiten Wechselspannungsanschluss 8 abgewandte Ende des vierten Phasenmodulzweigs 44 und das dem dritten Wechselspannungsanschluss 9 abgewandte Ende des sechsten Phasenmodulzweigs 46 sind mit dem zweiten Gleichspannungsanschluss 48 elektrisch verbunden.

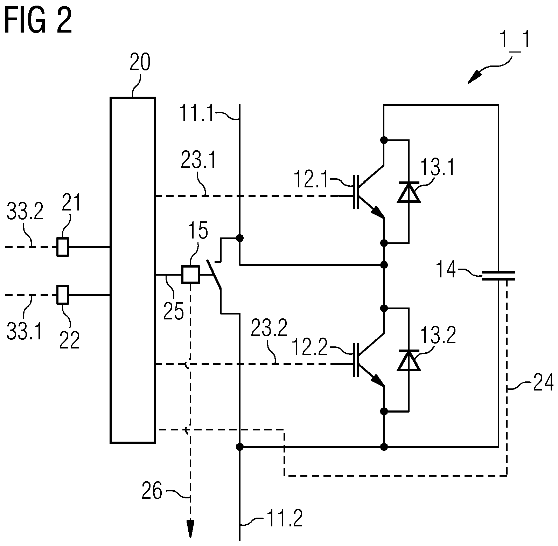

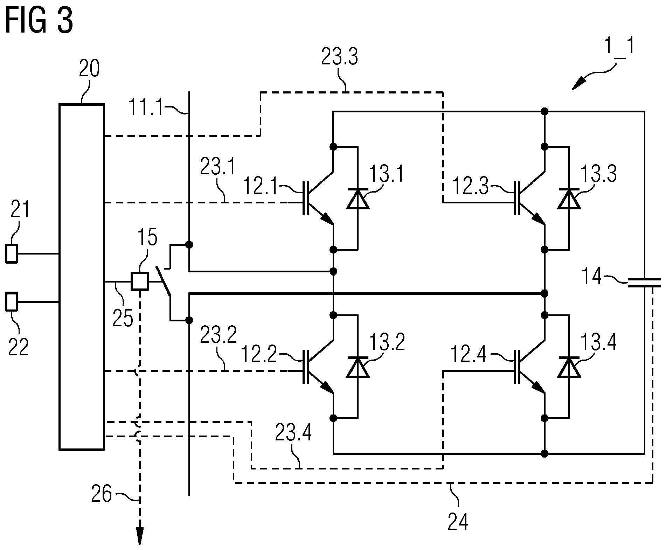

Jeder Phasenmodulzweig 41, 42, 43, 44, 45, 46 weist eine Mehrzahl von Submodulen (1 1, 1_2, 1_3, ... 1_n; 2 1 ... 2_n, usw.) auf, welche, insbesondere mittels ihrer Submodulanschlüsse 11.1, 11.2 (siehe Fig. 2 und 3), elektrisch in Reihe geschaltet sind. In jedem der Phasenmodulzweige 41, 42, 43, 44, 45, 46 fließt ein aus dem Arbeitspunkt des modularen Multilevel-Umrichters 1 resultierender Armstrom. Der Arbeitspunkt und der daraus resultierende Armstrom werden aus der Wirkleistung und der Blindleistung gegenüber den Gleichspannungsanschlüssen 47, 48 und den Wechselspannungsanschlüssen 7, 8, 9 des modularen Multilevel-Umrichters 1 bestimmt.

In diesem Ausführungsbeispiel weist jeder Phasenmodulzweig 41, 42, 43, 44, 45, 46 n Submodule 1_1 bis 6_n auf. Die Anzahl der elektrisch in Reihe geschalteten Submodule 1_1 bis 6_n kann unterschiedlich sein, mindestens sind zwei Submodule 1_1 bis 6_n in Reihe geschaltet, es können aber auch beispielsweise zumindest 50 oder zumindest 100 Submodule 1_1 bis 6_n elektrisch in Reihe geschaltet sein. In diesem Ausführungsbeispiel ist n = 36. Der erste Phasenmodulzweig 41 weist also 36 Submodule 1_1, 1_2, 1_3, ... 1_36 auf.

Im linken Bereich der Fig. 1 ist schematisch eine Kommunikationsvorrichtung 30 des modularen Multilevel-Umrichters 10 für die Submodule 1_1 bis 6_n dargestellt. Die Kommunikationsvorrichtung 30 kann auch als Steuervorrichtung ausgebildet sein oder eine Steuervorrichtung kann die Kommunikationsvorrichtung 30 umfassen. Von der Kommunikationsvorrichtung 30 werden optische Nachrichten zu den einzelnen Submodulen 1_1 bis 6_n übertragen.

Die Nachrichtenübertragung zwischen der Steuervorrichtung 30 und einem Submodul 1_1 bis 6_n ist jeweils durch eine gestrichelte Linie 33 dargestellt, wobei die Richtung der Nachrichtenübertragung durch die Pfeilspitze an den gestrichelten Linien 33 symbolisiert wird. Vorliegend erfolgt die Kommunikation durch erste Lichtwellenleiter 33.1, 33.12, 33.3, 33.4, 33.5, 33.6, die mittels der gestrichelten Linien gezeigt sind. Die Kommunikationsvorrichtung 30 sendet mittels zweiter Kommunikationsausgänge 31.1, 31.2, 31.3, vorliegend optischer Ausgänge, optische Nachrichten an die Submodule 1_1 bis 6_n ab und empfängt optische Nachrichten von den einzelnen Submodulen mittels zweiter Kommunikationseingänge 32.1, 32.2, 32.3, vorliegend optischer Eingänge. Dies ist am Beispiel der Submodule 1_1, l_n und 4_3 dargestellt; zu den anderen der Submodule 1_1 bis 6_n werden auf die gleiche Art und Weise optische Nachrichten gesendet bzw. von diesen Submodulen 1_1 bis 6_n empfangen.

Figur 2 zeigt eine schematische Ansicht eines als Halbbrückenmodul ausgebildeten Submoduls 1_1 in dem modularen Multilevel-Umrichter aus Fig. 1.

Dabei kann es sich beispielsweise um das Submodul 1_1 des ersten Phasenmodulzweigs 41 (oder auch um eines der anderen in Fig. 1 dargestellten Submodule) handeln. Das Submodul 1_1 ist als ein Halbbrückenmodul 1_1 ausgestaltet. Das Submodul 1_1 weist ein erstes elektronisches Schaltelement 12.1 in Form eines abschaltbaren Halbleiterventils mit einer ersten antiparallel geschalteten Diode 13.1 auf. Weiterhin weist das Submodul 1_1 ein zweites elektronisches Schaltelement 12.2 in Form eines abschaltbaren Halbleiterventils mit einer zweiten antiparallel geschalteten Diode 13.2 sowie einen elektrischen Energiespeicher 14 in Form eines Kondensators auf. Die elektronischen Schaltelemente 12.1, 12.2 sind jeweils als Bipolartransistoren mit isolierter Gate-Elektrode ausgebildet.

Das erste elektronische Schaltelement 12.1 ist elektrisch mit dem zweiten elektronischen Schaltelement 12.2 in Reihe geschaltet. An einem Verbindungspunkt zwischen den beiden elektronischen Schaltelementen 12.1, 12.2 ist ein erster Submodulanschluss 11.1 angeordnet. An dem Anschluss des zweiten elektronischen Schaltelements 12.2, welcher diesem Verbindungspunkt gegenüberliegt, ist ein zweiter Submodulanschluss 11.2 angeordnet. Der zweite Submodulanschluss 11.2 ist weiterhin mit einem ersten Anschluss des elektrischen Energiespeichers 14 verbunden. Ein zweiter Anschluss des Energiespeichers 14 ist elektrisch mit dem Anschluss des ersten Submodulanschlusses 12.1, der dem Verbindungspunkt gegenüberliegt, verbunden.

Der Energiespeicher 14 ist somit elektrisch parallel geschaltet zu der Reihenschaltung der elektronischen Schaltelemente 12.1, 12.2. Durch entsprechende Ansteuerung der elektronischen Schaltelemente 12.1, 12.2 durch eine nicht gezeigte Ansteuerschaltung mit submodulinternem Kommunikationselement 20 kann erreicht werden, dass zwischen dem ersten Submodulanschluss 11.1 und dem zweiten Submodulanschluss 11.2 entweder die Spannung des Energiespeichers 14 ausgegeben wird oder keine Spannung ausgegeben wird (das heißt eine Nullspannung ausgegeben wird). Durch Zusammenwirken der Submodule der einzelnen Phasenmodulzweige 41, 42, 43, 44, 45, 46 kann so eine jeweils gewünschte Ausgangsspannung des modularen Multilevel-Umrichters 10 erzeugt werden.

Zwischen den Submodulanschlüssen 11.1, 11.2 ist ein Bypass-Schalter 15 angeordnet. Wenn der Bypass-Schalter 15 geschlossen wird, fließt der Strom über den geschlossenen Bypass-Schalter 15 anstatt zu den elektronischen Schaltelementen 12.1, 12.2 und dem elektrischen Energiespeicher 14.

Zur submodulexternen Kommunikation weist das Submodul 1_1 einen ersten Kommunikationseingang 21, vorliegend ein optischer Eingang, und einen ersten Kommunikationsausgang 22, vorliegend ein optischer Ausgang, auf. Das Kommunikationselement 20 ist mit dem ersten Kommunikationseingang 21 und dem ersten Kommunikationsausgang 22 verbunden. An den ersten Kommunikationseingang 21 und den zweiten Kommunikationsausgang 22 werden zur submodulexternen Kommunikation jeweils erste Lichtwellenleiter 33.1, 33.2 angeschlossen, die jeweils mit einem der zweiten Kommunikationsausgänge 31 und der zweiten Kommunikationseingängen 32 verbunden werden. Dadurch kann die Ansteuerschaltung bzw. das Kommunikationselement 20 Zustände des Submoduls 1_1 erfassen und an die Kommunikationsvorrichtung 30 melden.

Der erste Kommunikationseingang 21 des Submoduls 1_1 leitet die an ihm eintreffenden Nachrichten zu dem Kommunikationselement 20 weiter. Das Kommunikationselement 20 gibt (veränderte oder unveränderte) Nachrichten an dem ersten Kommunikationsausgang 22 des Submoduls 1_1 aus.

Ferner sind die elektronischen Schaltelemente 12.1, 12.2 mittels zweier Lichtwellenleiter 23.1, 23.1 mit dem Kommunikationselement 20 verbunden, um beispielsweise der Kommunikationsvorrichtung 30 einen Status über die elektronischen Schaltelemente 12.1, 12.2 (blockiert oder nicht blockiert) zu übermitteln oder von der Kommunikationsvorrichtung 30 eine Nachricht zu empfangen, dass die elektronischen Schaltelemente 12.1, 12.2 blockiert werden sollen.

Das Submodul 1_1 ist mittels des dritten Lichtwellenleiters 24 mit dem elektrischen Energiespeicher 14 kommunikationstechnisch verbunden. Dadurch kann die Ansteuerschaltung bzw. das Kommunikationselement 20 den Ladezustand des elektrischen Energiespeichers 14 erfassen und an die Kommunikationsvorrichtung 30 melden.

Darüber hinaus ist der Bypass-Schalter 15 mittels eines vierten Lichtwellenleiters 25 mit dem Kommunikationselement 20 verbunden. Dadurch kann das Kommunikationselement 20 den Zustand des Bypass-Schalters 15, also ob dieser geschlossen oder offen ist, ändern und/oder abfragen. Insbesondere kann der Bypass-Schalter 15 geschlossen werden, wenn das Submodul 1_1 blockiert ist und der elektrische Energiespeicher 14 voll aufgeladen ist.

Zudem führt ein fünfter Lichtwellenleiter 26 von dem Bypass-Schalter 15 nach außerhalb des Submoduls 1_1 weg. Dieser fünfte Lichtwellenleiter 26 führt zu einem Kommunikationselement 20 eines zu dem Submodul 1_1 benachbarten Submoduls 1_2. Mittels des benachbarten Submoduls 1_2 kann dadurch geprüft werden, ob der Bypass-Schalter 15 geschlossen ist oder nicht, selbst wenn eine Kommunikation der Kommunikationsvorrichtung 30 mit dem Kommunikationselement 20 des Submoduls 1_1 ausfällt, soweit die Kommunikation der Kommunikationsvorrichtung 30 mit dem Kommunikationselement 20 des benachbarten Submoduls 1_2 funktioniert.

Figur 3 zeigt eine schematische Ansicht eines Vollbrückenmoduls 1_1 in dem modularen Multilevel-Umrichter aus Fig. 1.

Das als Vollbrückenmodul ausgebildete Submodul 1_1 weist gegenüber dem Halbbrückenmodul aus Fig. 2 vier elektronische Schaltelemente 12.1, 12.2, 12.3, 12.4 sowie vier Dioden 13.1, 13.2, 13.3, 13.4 auf. Es zeichnet sich dadurch aus, dass bei entsprechender Ansteuerung der vier elektronischen Schaltelemente 12.1, 12.2, 12.3, 12.4 zwischen dem ersten Submodulanschluss 11.1 und dem zweiten Submodulanschluss 11.2 wahlweise entweder die positive Spannung des Energiespeichers 14, die negative Spannung des Energiespeichers 14 oder eine Spannung des Wertes Null (Nullspannung) ausgegeben werden kann. Somit kann also mittels des Vollbrückenmoduls die Polarität der Ausgangsspannung umgekehrt werden. Der modulare Multilevel-Umrichter 10 aus Fig. 1 kann entweder nur Halbbrückenmodule, nur Vollbrückenmodule oder auch Halbbrückenmodule und Vollbrückenmodule aufweisen.

Bezugszeichen

| | |
|---|---|
| 1 | erstes Submodul |
| 2 | zweites Submodul |
| 3 | drittes Submodul |
| 4 | viertes Submodul |
| 5 | fünftes Submodul |
| 6 | sechstes Submodul |
| 7 | erster Wechselspannungsanschluss |
| 8 | zweiter Wechselspannungsanschluss |
| 9 | dritter Wechselspannungsanschluss |
| 10 | modularer Multilevel-Umrichter |
| 11 | Submodulanschluss |
| 12 | elektronisches Schaltelement |
| 13 | Diode |
| 14 | elektrischer Energiespeicher |
| 15 | Bypass-Schalter |
| 20 | Kommunikationselement |
| 21 | erster Kommunikationseingang |
| 22 | erster Kommunikationsausgang |
| 23 | zweiter Lichtwellenleiter |
| 24 | dritter Lichtwellenleiter |
| 25 | vierter Lichtwellenleiter |
| 26 | fünfter Lichtwellenleiter |
| 30 | Kommunikationsvorrichtung |
| 31 | zweiter Kommunikationsausgang |
| 32 | zweiter Kommunikationseingang |
| 33 | erster Lichtwellenleiter |
| 41 | erster Phasenmodulzweig |
| 42 | zweiter Phasenmodulzweig |
| 43 | dritter Phasenmodulzweig |
| 44 | vierter Phasenmodulzweig |
| 45 | fünfter Phasenmodulzweig |
| 46 | sechster Phasenmodulzweig |
| 47 | erster Gleichspannungsanschluss |
| 48 | zweiter Gleichspannungsanschluss |
| 51 | erstes Phasenmodul |
| 52 | zweites Phasenmodul |
| 53 | drittes Phasenmodul |

**Patentansprüche**

1. Verfahren zum Betreiben eines modularen Multilevel-Umrichters (10) mit einer Vielzahl von Submodulen (1, 2, 3, 4, 5, 6), welche jeweils zumindest zwei elektronische Schaltelemente (12), einen elektrischen Energiespeicher (14), zwei Submodulanschlüsse (11), einen Bypass-Schalter (15) zur Überbrückung seines Submoduls (1, 2, 3, 4, 5, 6) in dem modularen Multilevel-Umrichter (10) und ein Kommunikationselement (20) zur Kommunikation mit einer Kommunikationsvorrichtung (30) des modularen Multilevel-Umrichters (10) aufweisen, wobei das Verfahren die Schritte aufweist:

(a) Ermitteln, dass die Vielzahl von Submodulen (1, 2, 3, 4, 5, 6) ein derart defektes Submodul (1, 2, 3, 4, 5, 6) aufweist, dass das Kommunikationselement (20) in dem defekten Submodul (1, 2, 3, 4, 5, 6) nicht mit der Kommunikationsvorrichtung (30) kommuniziert,

**gekennzeichnet durch**

(b) Bestimmen, ob ein aktueller aus einem Arbeitspunkt des modularen Multilevel-Umrichters (10) resultierender Armstrom unterhalb eines vorbestimmten Schwellenwertes liegt,

(c) Erzeugen oder Verstärken eines internen Kreisstromes in dem modularen Multilevel-Umrichter (10) mit dem defekten Submodul (1, 2, 3, 4, 5, 6), falls der aus dem Arbeitspunkt des modularen Multilevel-Umrichters (10) resultierende Armstrom unterhalb des vorbestimmten Schwellenwertes liegt, wobei der interne Kreisstrom über den elektrischen Energiespeicher (14) des defekten Submoduls (1, 2, 3, 4, 5, 6) fließt, wobei das defekte Submodul (1, 2, 3, 4, 5, 6) vor dem Erzeugen oder Verstärken des internen Kreisstromes in dem modularen Multilevel-Umrichter (10) blockiert wird, wodurch der elektrische Energiespeicher (14) in dem defekten Submodul (1, 2, 3, 4, 5, 6) mittels des internen Kreisstromes aufgeladen wird, und wobei der Bypass-Schalter (15) des blockierten defekten Submoduls (1, 2, 3, 4, 5, 6) geschlossen wird, um das blockierte defekte Submodul (1, 2, 3, 4, 5, 6) in dem modularen Multilevel-Umrichter (10) zu überbrücken, wenn der elektrische Energiespeicher (14) des blockierten defekten Submoduls (1, 2, 3, 4, 5, 6) mittels des internen Kreisstromes eine vorbestimmte Aufladung erreicht hat, und

(d) Überwachen einer Schließung des Bypass-Schalters nicht nur von dem betreffenden Submodul selbst, sondern auch von einem anderen Submodul, insbesondere von einem benachbarten Submodul, wobei jedes Submodul (1, 2, 3, 4, 5, 6) der Vielzahl von Submodulen (1, 2, 3, 4, 5, 6) mittels je eines Kommunikationselements (20) mit einem Bypass-Schalter (15) eines anderen Submoduls (1, 2, 3, 4, 5, 6) der Vielzahl von Submodulen (1, 2, 3, 4, 5, 6) kommunikationstechnisch verbunden ist, um jeweils den Zustand eines Bypass-Schalters (15) jedes Submoduls (1, 2, 3, 4, 5, 6) der Vielzahl von Submodulen (1, 2, 3, 4, 5, 6) mittels jeweils eines anderen Submoduls (1, 2, 3, 4, 5, 6) zu überwachen, wobei das Erzeugen oder Verstärken des Kreisstromes in dem modularen Multilevel-Umrichter (10) mit dem defekten Submodul (1, 2, 3, 4, 5, 6) erfolgt, falls ferner das Kommunikationselement (20) eines das defekte Submodul (1, 2, 3, 4, 5, 6) überwachenden Submoduls (1, 2, 3, 4, 5, 6), das mit dem Bypass-Schalter (15) des defekten Submoduls (1, 2, 3, 4, 5, 6) kommunikationstechnisch verbunden ist, an die Kommunikationsvorrichtung (30) kommuniziert, dass der Bypass-Schalter (15) des defekten Submoduls (1, 2, 3, 4, 5, 6) offen ist.

2. Verfahren nach Anspruch 1,
**dadurch gekennzeichnet,**
**dass** nach einer vorgegebenen Zeitdauer des Fließens des erzeugten oder verstärkten internen Kreisstromes in dem modularen Multilevel-Umrichter (10) mit dem defekten Submodul (1, 2, 3, 4, 5, 6) mittels des das defekte Submodul (1, 2, 3, 4, 5, 6) überwachenden Submoduls (1, 2, 3, 4, 5, 6) geprüft wird, ob der Bypass-Schalter (15) in dem defekten Submodul geschlossen ist.

3. Verfahren nach Anspruch 2,
**dadurch gekennzeichnet,**
**dass** die vorgegebene Zeitdauer in Abhängigkeit von der Stromstärke des erzeugten oder verstärkten Umrichter-internen Kreisstromes eingestellt wird.

4. Verfahren nach Anspruch 2 oder 3,
**dadurch gekennzeichnet,**
**dass** der modulare Multilevel-Umrichter (10) mit dem defekten Submodul (1, 2, 3, 4, 5, 6) ausgeschaltet wird, falls das das defekte Submodul (1, 2, 3, 4, 5, 6) überwachende Submodul (1, 2, 3, 4, 5, 6) nach Ablauf der vorgegebenen Zeitdauer mittels seines Kommunikationselementes (20) an die Kommunikationsvorrichtung (30) kommuniziert, dass der Bypass-Schalter (15) des defekten Submoduls (1, 2, 3, 4, 5, 6) offen ist.

5. Verfahren nach einem der voranstehenden Ansprüche,
**dadurch gekennzeichnet,**
**dass** eine Höhe, Frequenz und/oder Phasenlage des internen Kreisstromes in dem modularen Multilevel-Umrichter (10) mit dem defekten Submodul (1, 2, 3, 4, 5, 6) in Abhängigkeit von dem aus dem Arbeitspunkt des modularen Multilevel-Umrichters (10) resultierenden Armstroms eingestellt wird.

6. Verfahren nach einem der voranstehenden Ansprüche,
**dadurch gekennzeichnet,**
**dass** der Schwellenwert des aus dem Arbeitspunkt resultierenden Armstroms derart vorbestimmt ist oder wird, dass ein Schließen des Bypass-Schalters (15) in dem blockierten defekten Submodul (1, 2, 3, 4, 5, 6) bei Betreiben des modularen Multilevel-Umrichters (10) bei dem Schwellenwert höchstens 10 Sekunden dauert.

7. Verfahren nach einem der voranstehenden Ansprüche,
**dadurch gekennzeichnet,**

**dass** die Submodule (1, 2, 3, 4, 5, 6) als Halbbrückenmodule und/oder als Vollbrückenmodule ausgebildet sind.

8. Modularer Multilevel-Umrichter (10) gemäß den Merkmalen eines der voranstehenden Ansprüche, wobei der modulare Multilevel-Umrichter (10) derart eingerichtet ist, dass er ein Verfahren nach einem der voranstehenden Ansprüche ausführt.

## Claims

1. Method for operating a modular multilevel converter (10) comprising a plurality of submodules (1, 2, 3, 4, 5, 6), each of which has at least two electronic switching elements (12), an electrical energy store (14), two submodule connections (11), a bypass switch (15) for bridging its submodule (1, 2, 3, 4, 5, 6) in the modular multilevel converter (10), and a communication element (20) for communication with a communication device (30) of the modular multilevel converter (10), the method comprising the following steps:

(a) ascertaining that the plurality of submodules (1, 2, 3, 4, 5, 6) have a submodule (1, 2, 3, 4, 5, 6) which is defective such that the communication element (20) in the defective submodule (1, 2, 3, 4, 5, 6) does not communicate with the communication device (30),
**characterized by**
(b) determining whether a present arm current resulting from an operating point of the modular multilevel converter (10) is below a predetermined threshold value,
(c) generating or amplifying an internal circulating current in the modular multilevel converter (10) with the defective submodule (1, 2, 3, 4, 5, 6) if the arm current resulting from the operating point of the modular multilevel converter (10) is below the predetermined threshold value, the internal circulating current flowing via the electrical energy store (14) of the defective submodule (1, 2, 3, 4, 5, 6), the defective submodule (1, 2, 3, 4, 5, 6) being blocked before generating or amplifying the internal circulating current in the modular multilevel converter (10), as a result of which the electrical energy store (14) in the defective submodule (1, 2, 3, 4, 5, 6) is charged by means of the internal circulating current, and the bypass switch (15) of the blocked defective submodule (1, 2, 3, 4, 5, 6) being closed in order to bridge the blocked defective submodule (1, 2, 3, 4, 5, 6) in the modular multilevel converter (10) if the electrical energy store (14) of the blocked defective submodule (1, 2, 3, 4, 5, 6) has reached a predetermined charging by means of the internal circulating current, and
(d) monitoring the closing of the bypass switch not only by the relevant submodule itself, but also by another submodule, in particular by a neighboring submodule, each submodule (1, 2, 3, 4, 5, 6) of the plurality of submodules (1, 2, 3, 4, 5, 6) being connected to a bypass switch (15) of another submodule (1, 2, 3, 4, 5, 6) of the plurality of submodules (1, 2, 3, 4, 5, 6) in terms of communication technology by means of a respective communication element (20) in order in each case to monitor the state of a bypass switch (15) of each submodule (1, 2, 3, 4, 5, 6) of the plurality of submodules (1, 2, 3, 4, 5, 6) by means of another submodule (1, 2, 3, 4, 5, 6) in each case,

generating or amplifying the circulating current in the modular multilevel converter (10) with the defective submodule (1, 2, 3, 4, 5, 6) being effected if furthermore the communication element (20) of a submodule (1, 2, 3, 4, 5, 6) which monitors the defective submodule (1, 2, 3, 4, 5, 6) and which is connected to the bypass switch (15) of the defective submodule (1, 2, 3, 4, 5, 6) in terms of communication technology communicates to the communication device (30) the fact that the bypass switch (15) of the defective submodule (1, 2, 3, 4, 5, 6) is open.

2. Method according to Claim 1,
**characterized**
**in that** after a predefined time duration of the flowing of the generated or amplified internal circulating current in the modular multilevel converter (10) with the defective submodule (1, 2, 3, 4, 5, 6), by means of the submodule (1, 2, 3, 4, 5, 6) which monitors the defective submodule (1, 2, 3, 4, 5, 6), a check is made to establish whether the bypass switch (15) in the defective submodule is closed.

3. Method according to Claim 2,
**characterized**
**in that** the predefined time duration is set depending on the current intensity of the generated or amplified converter-internal circulating current.

4. Method according to Claim 2 or 3,
**characterized**
**in that** the modular multilevel converter (10) with the defective submodule (1, 2, 3, 4, 5, 6) is switched off if the submodule (1, 2, 3, 4, 5, 6) which monitors the defective submodule (1, 2, 3, 4, 5, 6), after the predefined time duration has elapsed, communicates by means of its communication element (20) to the communication device (30) the fact that the bypass switch (15) of the defective submodule (1, 2, 3, 4, 5, 6) is open.

5. Method according to any of the preceding claims,
**characterized**
**in that** a magnitude, frequency and/or phase angle of the internal circulating current in the modular multilevel converter (10) with the defective submodule (1, 2, 3, 4, 5, 6) are/is set depending on the arm current resulting from the operating point of the modular multilevel converter (10).

6. Method according to any of the preceding claims,
**characterized**
**in that** the threshold value of the arm current resulting from the operating point has been or is predetermined in such a way that closing of the bypass switch (15) in the blocked defective submodule (1, 2, 3, 4, 5, 6) has a duration of at most 10 seconds when the modular multilevel converter (10) is operated at the threshold value.

7. Method according to any of the preceding claims,
**characterized**
**in that** the submodules (1, 2, 3, 4, 5, 6) are embodied as half-bridge modules and/or as full-bridge modules.

8. Modular multilevel converter (10) according to the features of any of the preceding claims,
wherein the modular multilevel converter (10) is configured such that it carries out a method according to any of the preceding claims.

**Revendications**

1. Procédé pour faire fonctionner un convertisseur (10) modulaire à plusieurs niveaux ayant une pluralité de sous-modules (1, 2, 3, 4, 5, 6), qui ont chacun au moins deux éléments (12) électroniques de coupure, un accumulateur (14) d'énergie électrique, deux bornes (11) de sous-module, un interrupteur (15) de dérivation pour le court-circuitage de son sous-module (1, 2, 3, 4, 5, 6) dans le convertisseur (10) modulaire à plusieurs niveaux et un élément (20) de communication pour la communication avec un dispositif (30) de communication du convertisseur (10) modulaire à plusieurs niveaux, dans lequel le procédé comporte les stades :

(a) déterminer, que la pluralité de sous-modules (1, 2, 3, 4, 5, 6) a un sous-module (1, 2, 3, 4, 5, 6) défectueux, tel que l'élément (20) de communication dans le sous-module (1, 2, 3, 4, 5, 6) défectueux ne communique pas avec le dispositif (30) de communication,
**caractérisé par**
(b) déterminer, si un courant pauvre en cours, résultant d'un point de travail du convertisseur (10) modulaire à plusieurs niveaux, est en-dessous d'une valeur de seuil déterminée à l'avance,

(c) produire ou amplifier un courant circulaire interne dans le convertisseur (10) modulaire à plusieurs niveaux ayant le sous-module (1, 2, 3, 4, 5, 6) défectueux, si le courant pauvre, résultant du point de travail du convertisseur (10) modulaire à plusieurs niveaux, est en-dessous de la valeur de seuil déterminée à l'avance, dans lequel le courant circulaire interne passe par l'accumulateur (14) d'énergie électrique du sous-module (1, 2, 3, 4, 5, 6) défectueux, dans lequel on bloque le sous-module (1, 2, 3, 4, 5, 6) défectueux avant la production ou l'amplification du courant circulaire interne dans le convertisseur (10) modulaire à plusieurs niveaux, grâce à quoi on charge au moyen du courant circulaire interne l'accumulateur (14) d'énergie électrique dans le sous-module (1, 2, 3, 4, 5, 6) défectueux, et dans lequel on ferme l'interrupteur (15) de dérivation du sous-module (1, 2, 3, 4, 5, 6) défectueux bloqué afin de court-circuiter le sous-module (1, 2, 3, 4, 5, 6) défectueux bloqué dans le convertisseur (10) modulaire à plusieurs niveaux si l'accumulateur (14) d'énergie électrique du sous-module (1, 2, 3, 4, 5, 6) défectueux bloqué a atteint une charge déterminée à l'avance au moyen du courant circulaire interne, et

(d) contrôler une fermeture de l'interrupteur de dérivation non seulement par le sous-module concerné lui-même, mais également par un autre sous-module, en particulier par un sous-module voisin, dans lequel chaque sous-module (1, 2, 3, 4, 5, 6) de la pluralité de sous-modules (1, 2, 3, 4, 5, 6) est relié en technique de communication au moyen de respectivement un élément (20) de communication à un interrupteur (15) de dérivation d'un autre sous-module (1, 2, 3, 4, 5, 6) de la pluralité de sous-modules (1, 2, 3, 4, 5, 6), afin de contrôler, au moyen de respectivement un autre sous-module (1, 2, 3, 4, 5, 6), respectivement l'état de l'interrupteur (15) de dérivation de chaque sous-module (1, 2, 3, 4, 5, 6) de la pluralité de sous-modules (1, 2, 3, 4, 5, 6), dans lequel la production ou l'amplification du courant circulaire dans le convertisseur (10) modulaire à plusieurs niveaux ayant le sous-module (1, 2, 3, 4, 5, 6) défectueux s'effectue, si en outre l'élément (20) de communication d'un sous-module (1, 2, 3, 4, 5, 6) contrôlant le sous-module (1, 2, 3, 4, 5, 6) défectueux, qui est relié en technique de communication avec l'interrupteur (15) de dérivation du sous-module (1, 2, 3, 4, 5, 6) défectueux, communique au dispositif (30) de communication que l'interrupteur (15) de dérivation du sous-module (1, 2, 3, 4, 5, 6) défectueux est ouvert.

2. Procédé suivant la revendication 1, **caractérisé en ce que**, après une durée donnée à l'avance du passage du courant circulaire interne produit ou amplifié dans le convertisseur (10) modulaire à plusieurs niveaux ayant le sous-module (1, 2, 3, 4, 5, 6) défectueux, on contrôle, au moyen du sous-module (1, 2, 3, 4, 5, 6) contrôlant le sous-module (1, 2, 3, 4, 5, 6) défectueux, si l'interrupteur (15) de dérivation dans le sous-module défectueux est fermé.

3. Procédé suivant la revendication 2, **caractérisé en ce que l'** on règle la durée donnée à l'avance en fonction de l'intensité du courant circulaire interne au convertisseur produit ou amplifié.

4. Procédé suivant la revendication 2 ou 3, **caractérisé en ce que l'** on met hors circuit le convertisseur (10) modulaire à plusieurs niveaux ayant le sous-module (1, 2, 3, 4, 5, 6) défectueux si le sous-module (1, 2, 3, 4, 5, 6) contrôlant le sous-module (1, 2, 3, 4, 5, 6) défectueux communique, après l'expiration de la durée donnée à l'avance, au moyen de son élément (20) de communication, au dispositif (30) de communication, que l'interrupteur (15) de dérivation du sous-module (1, 2, 3, 4, 5, 6) défectueux est ouvert.

5. Procédé suivant l'une des revendications précédentes, **caractérisé en ce que l'** on règle l'intensité, la fréquence et/ou la position en phase du courant circulaire interne dans le convertisseur (10) modulaire à plusieurs niveaux ayant le sous-module (1, 2, 3, 4, 5, 6) défectueux en fonction du courant pauvre résultant du point de travail du convertisseur (10) modulaire à plusieurs niveaux.

6. Procédé suivant l'une des revendications précédentes, **caractérisé en ce que** la valeur de seuil du courant pauvre résultant du point de travail est déterminé à l'avance ou on la détermine à l'avance, de manière à ce qu'une fermeture de l'interrupteur (15) de dérivation dans le sous-module (1, 2, 3, 4, 5, 6) défectueux bloqué dure 10 secondes au plus lors du fonctionnement du convertisseur (10) modulaire à plusieurs niveaux à la valeur de seuil.

7. Procédé suivant l'une des revendications précédentes, **caractérisé en ce que** les sous-modules (1, 2, 3, 4, 5, 6) sont constitués sous la forme de modules à demi-pont et/ou de modules à pont complet.

8. Convertisseur (10) modulaire à plusieurs niveaux suivant les caractéristiques de l'une des revendications précédentes,

dans lequel le convertisseur (10) modulaire à plusieurs niveaux est agencé de manière à exécuter un procédé suivant l'une des revendications précédentes.

# FIG 1

FIG 2

# FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2017125134 A1
- CN 110635675 A
- CN 110677029 A
- CN 107728508 B